(19) **Europäisches Patentamt / European Patent Office / Office européen des brevets**

(11) **EP 4 524 102 A1**

(12) **EUROPEAN PATENT APPLICATION**

(43) Date of publication:
19.03.2025 Bulletin 2025/12

(21) Application number: 24173293.2

(22) Date of filing: 30.04.2024

(51) International Patent Classification (IPC):
**C01B 17/45** (2006.01)    **B01D 53/00** (2006.01)

(52) Cooperative Patent Classification (CPC):
**B01D 53/002; C01B 17/453;** B01D 2251/108;
B01D 2256/26; B01D 2257/2027; B01D 2257/204;
B01D 2257/30; B01D 2259/40001

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.05.2023 IT 202300008553**

(71) Applicant: **Synecom S.r.l.**
**24040 Stezzano (IT)**

(72) Inventors:
• **PIROLA, Michele**
**24040 Stezzano (BG) (IT)**
• **ROSSI, Fabio**
**24040 Stezzano (BG) (IT)**
• **MARGHERITI, Domenico**
**24040 Stezzano (BG) (IT)**
• **ROVETTA, Massimo**
**24040 Stezzano (BG) (IT)**

(74) Representative: **Karaghiosoff, Giorgio
Alessandro
c/o Praxi Intellectual Property S.p.A. - Savona
Via F. Baracca 1R, 4° piano
"Il Gabbiano"
17100 Savona (IT)**

(54) **FLUORINATED GAS REGENERATION PLANT**

(57)    The invention relates to a plant and a method for the regeneration of fluorinated compounds, particularly sulfur hexafluoride, comprising:

an inlet section designed to receive a gas mixture including the fluorinated compound to be regenerated;

an outlet section designed to convey the regenerated gas out;

a fluid dynamic circuit that connects the inlet section with the outlet section and includes filtering elements. The filtering elements consist of a separation unit where the gas mixture is brought to a temperature and pressure such that the fluorinated compound condenses, while keeping the other components of the mixture in gaseous state. The condensed fluorinated compound represents the regenerated compound to be conveyed towards the outlet section.

Fig. 1

## Description

The present invention relates to a plant for the regeneration of fluorinated gases, particularly sulfur hexafluoride (SF6).

Current national and community regulations establish rules concerning the management and operation of plants and equipment using significant quantities of greenhouse fluorinated gases.

These regulations lay down provisions for the containment, use, recovery, and destruction of greenhouse fluorinated gases and related ancillary measures; conditions for the marketing of specific products and equipment that contain or whose functioning depends on greenhouse fluorinated gases; conditions for specific uses of greenhouse fluorinated gases; checks for leaks from plants and equipment concerning the fluorinated gases contained in them; drafting of reports containing historical data on the plant's performance with reference to the containment of the used fluorinated gases, to any alarms, maintenance interventions, and plant shutdowns. Fluorinated gases are used, for example, as an insulant in medium/high voltage electrical equipment and in particle accelerators. They are also used in the production of contrast media for CT and MRI in the medical field as well as in refrigeration systems.

Regardless of the use, when subjected to electric arcs or high temperatures, these gases, particularly sulfur hexafluoride, tend to transform, albeit in small amounts, into other gaseous compounds. This is due both to the disintegration of the molecule and, to a greater extent, to the presence of impurities that react with the molecules present in the environment. Impurities are generally caused by improper handling of the gas, particularly during transfer from cylinders inside the plant.

This means that fluorinated gases present in end-of-life plants cannot be reused and must be disposed of, resulting in environmental impact in terms of emissions from the burning of the exhausted gas and the generation of new gas for new plants.

Scope of the present invention is to provide a plant capable of regenerating fluorinated gases, in particular sulfur hexafluoride, starting from mixtures containing exhausted fluorinated gases.

The invention achieves its scope with a plant for the regeneration of fluorinated compounds, in particular sulfur hexafluoride, comprising:

> an inlet section suitable to receive a gas mixture comprising the fluorinated compound to be regenerated;
> an outlet section suitable to convey out the regenerated gas;
> a fluid dynamic circuit that connects the inlet section with the outlet section and comprises filtering elements.

The filtering elements include a separation unit in which the gas mixture is brought to a temperature and a pressure such as to condense the fluorinated compound while maintaining the other components of the mixture in a gaseous state, the condensed fluorinated compound representing the regenerated compound to be conveyed to the outlet section.

According to another aspect, the invention concerns a method for regenerating fluorinated gases, in particular sulfur hexafluoride, from a mixture containing fluorinated gases at the inlet comprising:

> separating the fluorinated compound from the remaining compounds present in the mixture by bringing the gas mixture to a temperature and a pressure such as to condense the fluorinated compound while keeping the other components of the mixture in a gaseous state;
> conveying the condensed fluorinated compound to an outlet section for collecting the regenerated gas, possibly repeating the separation step on the condensed compound exiting to increase the purity of the regenerated compound;
> conveying the gaseous-state mixture to a disposal section, possibly repeating the separation step on the disposal mixture to reduce the presence of fluorinated compounds in the disposal mixture.

The steps of separating the disposal mixture and/or the regenerated compound can advantageously be repeated at different pressures/temperatures to increase the purity of the final compound.

Further features and improvements are subject of the dependent claims.

The features of the invention and the advantages derived from it will become more apparent from the following detailed description of the attached figures, wherein:

- Fig. 1 shows a high-level block diagram of a plant according to an embodiment of the invention.
- Fig. 2 shows the detailed block diagram of a separation unit in a first configuration that can be used in a plant according to the invention.
- Fig. 3 shows the detailed block diagram of a separation unit in a second configuration that can be used in a plant according to the invention.
- Fig. 4 shows the detailed block diagram of a separation unit in a third configuration that can be used in a plant according to the invention.
- Fig. 5 shows a high-level block diagram of a plant according to another embodiment of the invention comprising a filtering group.
- Fig. 6 shows a detailed block diagram of the filtering group of the previous figure.
- Fig. 7 shows the detailed block diagram of a fluid dynamic circuit that can be used in a plant according to the invention.
- Fig. 8 schematically shows a set of three optional features subject to invention in an enhanced form: a heating element inside a generic separation unit, a recirculation micropump, and lamination filters within the separation units.

- Figure 9 shows the flow of fluorinated gases within the separation unit according to Figure 8.
- Figures 9a-9f provide three-dimensional details of the three features from Figure 8.
- Fig. 10 briefly shows the various processing phases of a fluorinated compound to be regenerated in a plant according to an embodiment of the invention.

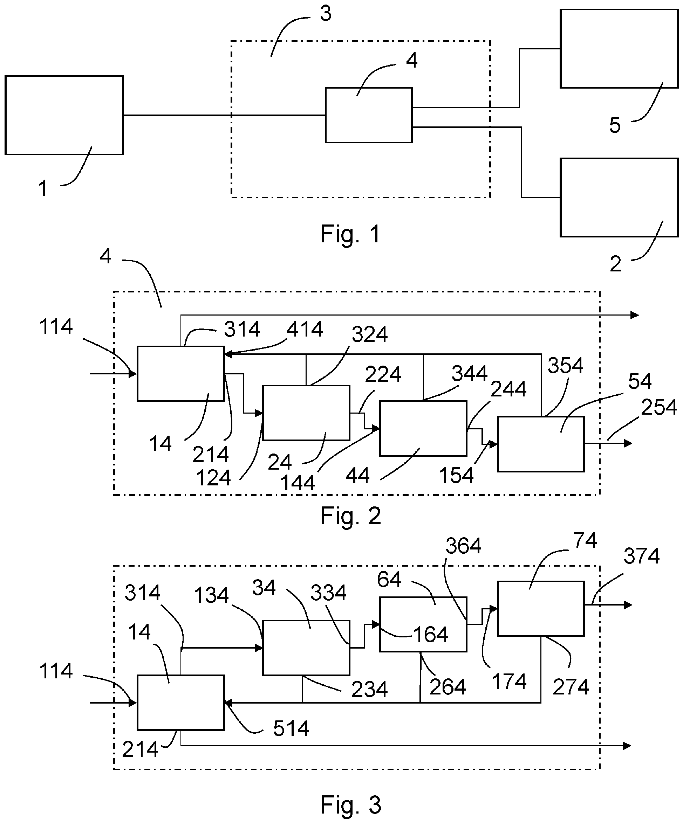

With reference to the block diagram in Fig. 1, a plant for the regeneration of fluorinated gases, particularly sulfur hexafluoride, according to an embodiment of the invention, comprises:

an inlet section 1 suitable to receive a gas mixture comprising the fluorinated compound to be regenerated through a connection interface with a tank or cylinder containing said mixture;
an outlet section 2 suitable to convey the regenerated gas out;
a fluid dynamic circuit 3 that connects the inlet section 1 with the outlet section 2 and comprises filtering elements.

The filtering elements include at least one separation unit 4 wherein the gas mixture coming from the inlet section 1 is brought to a temperature and a pressure such as to condense the fluorinated compound while keeping the other components of the mixture in a gaseous state.

The condensed fluorinated compound, thus in liquid form, is conveyed toward the outlet section 2, while the other gaseous components are conveyed to a waste section 5. The outlet section 2 is interfaced with a cylinder or collection tank for the regenerated fluorinated gas, either directly or through further processing units and/or analysis equipment such as gas chromatographs and/or sensors of various types for detecting the quality of the regenerated compound and its purity level.

The compound exiting toward the waste section 5 is, instead, stored in cylinders or tanks to be destined for incineration.

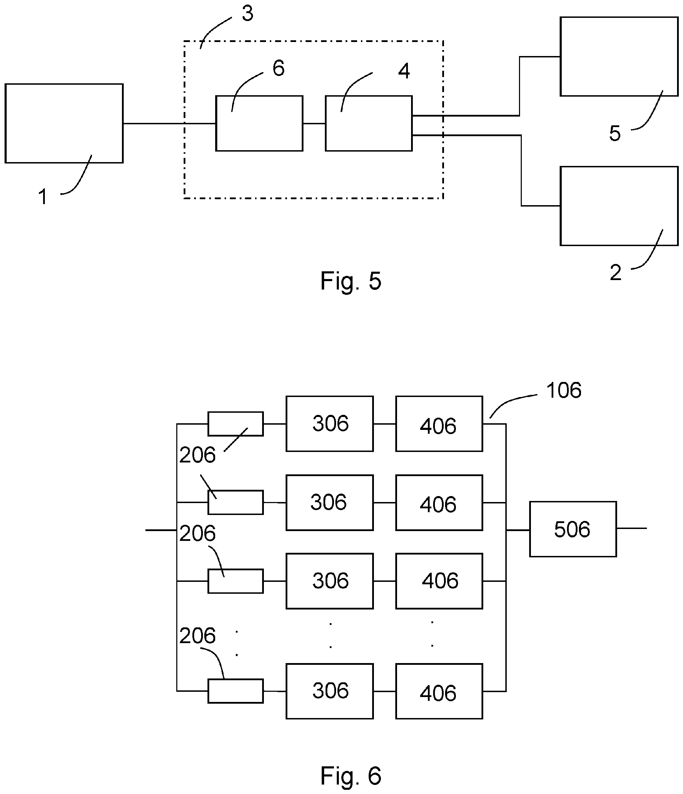

Additional filtering units 6 may be present in any section of the fluid dynamic circuit 3. These are preferably placed upstream of the separation unit 4 as shown in Fig. 5, although it is not excluded that such filtering units or a part of them may also be provided downstream of the separation unit 4.

The filtering units 6 can be filter banks, in series and/or parallel, with activated carbon, molecular sieves, silica gel, aluminum silicate, and the like provided in any combination. The filtering units 6 may also include dust filters preferably placed downstream of the aforementioned filters to remove dust particles present in the incoming gas mixture and/or released by the activated carbon and molecular sieve filters.

The filtering units 6 may advantageously comprise a plurality of filters 306, 406 arranged on multiple parallel branches 106 of the fluid dynamic circuit 3. Each branch 106 may have a single filter, multiple filters in series, such as two shown in Fig. 6, or no filter. The branches and their associated filters may vary depending on the volumes of gas the plant is designed to treat.

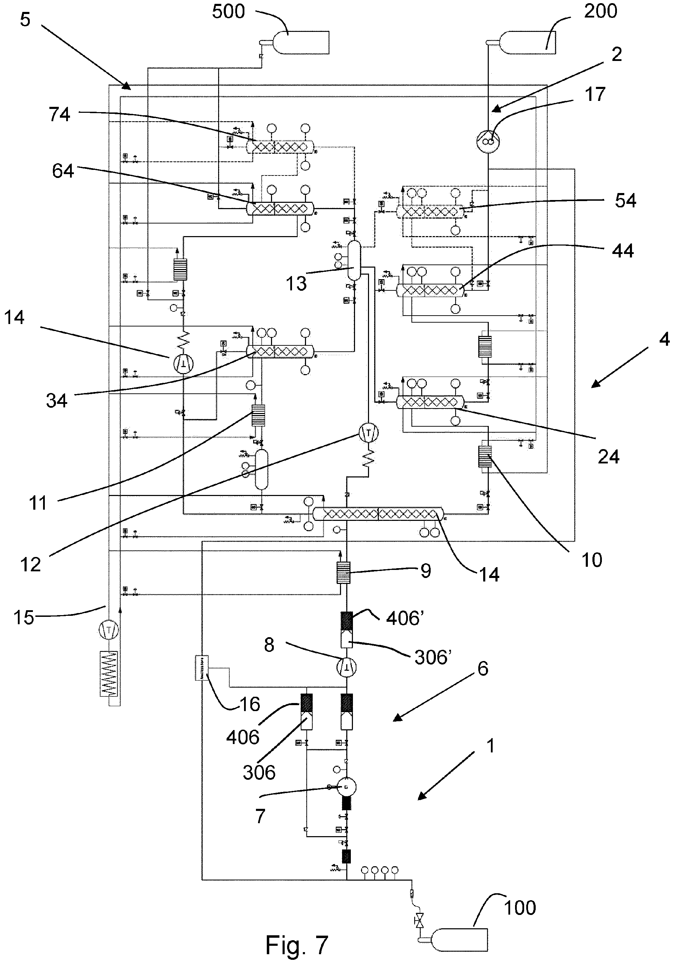

The filtering units can also include elements that modify the environmental characteristics of the gas, such as compressors and/or heat exchangers, in various configurations that provide different levels of filtration, with filters acting on both low-pressure and high-pressure gas, possibly in a combination of the two conditions such as in the case of a sequential arrangement with low-pressure filters (306, 406 in Figure 7) followed by filters operating at high pressure (306', 406') along the gas treatment path.

Flow block elements 206, such as solenoid valves controllable via a signal provided by a control unit supervising the plant's operation not shown in the figures, may be present on each branch 106. This allows the inclusion or exclusion of the corresponding filter or bank of filters from the circuit, thus varying the volume of gas and the type of filtration. Dust filters may thus be present on the branches 106 or at the common exit of such branches as shown in the Fig. 6 configuration.

In a particularly advantageous embodiment, two filtering stages are present. The first, using molecular sieves/activated alumina, allows the removal of moisture and partly acidic substances. If there are high amounts of acidic substances in the gas to be regenerated, it is advisable to proceed with the second filtration stage, in parallel or series, comprised of activated carbon. Activated carbon is not always used, but only when necessary, because it causes large quantities of dust that would quickly clog particulate filters placed downstream of the sieve/carbon filters.

In another particularly advantageous form, the filtering in the inlet section occurs in two stages, before and after a gas compression step. Thus, this process is optimized by acting under different conditions of the state of the fluorinated compound being treated.

Regarding the separation unit 4, this may be a single main unit or include multiple separation sub-units connected in cascade such as to refine the separation process of the fluorinated compound from the other gases present in the mixture as shown in Figs. 2, 3, and 4. Inside, in addition to other components, there are compressors and heat exchangers used to bring fluorinated compounds to known conditions during the various phases of the separation process.

The operating principle is described below. In the following pages, reference will be primarily made to sulfur hexafluoride as the gas to be regenerated, but the same principles can be applied to other fluorinated gases.

The incoming gas mixture 1, eventually dehumidified and dedusted by the filtering elements 6, comprises $SF_6$, i.e. the gas to be regenerated, and impurities due to the presence of other gases such as $N_2$, $CF_4$, CO, $CO_2$, which represent the pollutants to be separated.

$SF_6$ has a higher liquefaction point than the other polluting gases, hence the possibility of separating this compound by bringing the gas mixture, via compressors and heat exchangers, to a separation tower under conditions of pressure and temperature such that only $SF_6$ is liquified, leaving the other substances in a gaseous state. In this way, the pollutants remain at the top of the separation tower to be extracted and directed towards the disposal section 5, while the heavier liquid component collects at the bottom of the tower and can be extracted to be sent to the outlet section 2.

For this purpose, the separation unit 4 may comprise a first separation sub-unit 14 having a first inlet 114 suitable to receive the gas mixture to be separated, a first outlet 214 suitable to provide the condensed gas mixture, and a second outlet 314 suitable to provide the non-condensed gas mixture.

The gas mixture entering the first separation sub-unit 14 is advantageously brought, thanks to the compressor 8 and to the heat exchanger 9 to a pressure in the range of [10;50] bar and a temperature in the range of [-50;+5] °C, which are capable of providing a good level of separation.

The above-indicated ranges, as well as those discussed further on, may be narrowed depending on the chemical/physical characteristics, composition, and level of impurities of the mixture to be treated. The determination of specific values or a specific range is made deterministically based on the user's experience and/or the type of plant from which the gas to be regenerated comes, as well as the life cycle of the gas itself; experimentally, for example, it has been found that in certain cases the range of pressures can be restricted to [30;40] bar and the range of temperatures to [-10;0] °C.

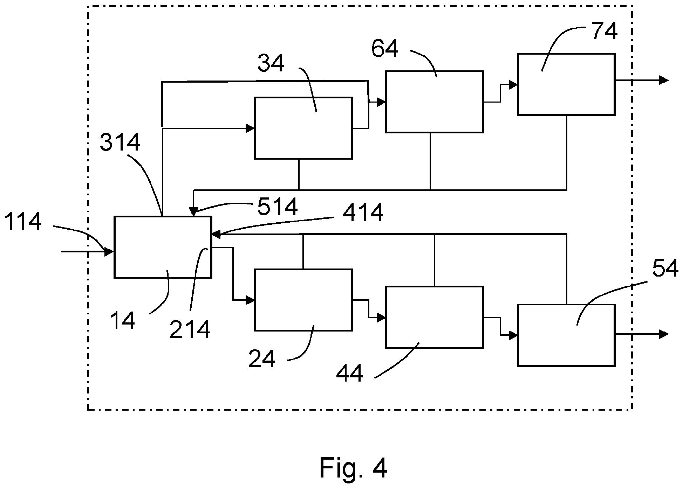

Since some of the pollutants may remain trapped in the liquid phase and, likewise, some $SF_6$ may remain in the gaseous state, the separation process may not be entirely efficient. For this reason, in some enhancements of the present invention, it is envisaged to use multiple separation sub-units in cascade that are capable of further acting on the liquid compound exiting the separation column (Fig. 2), on the gaseous compound exiting the separation column (Fig. 3), or on both compounds as shown in Fig. 4.

In one implementation, it is therefore provided that the separation unit 4 comprises a second separation sub-unit 24 having an inlet 124 suitable to receive a liquid-state mixture, a first outlet 224 suitable to provide a liquid-state mixture, and a second outlet 324 suitable to provide a gaseous-state mixture. The inlet 124 of the second separation sub-unit 24 is advantageously in fluid dynamic communication with the second outlet 214 of the first separation sub-unit 14 and cooperates with a heat exchanger 10 to control the temperature of the fluid in transit. In the variant shown, an additional compressor is not present, as the process requires that the second separation sub-unit works the compound under pressure conditions equal to or lower (by means of pressure reduction devices such as expanders or flow regulators) than the operational conditions of the first separation subunit. However, other embodiments might envisage different working conditions and thus include compressors for the compound entering the second sub-unit 24. The second outlet 324 of the second separation sub-unit 24 is, instead, in fluid dynamic communication with a second inlet 414 of the first separation sub-unit 14 so that the gaseous mixture exiting the second separation sub-unit 24 can mix with the gas mixture to be separated introduced from the first inlet 114 of the first separation sub-unit 14.

In this way, any gaseous residues trapped in the liquid exiting from the first separation subunit 14 can undergo a further separation process preferably involving different pressure and temperature values. In particular, the mixture entering the second separation subunit 24 is advantageously brought to a pressure in the range of [6;10] bar and a temperature in the range of [-50;-10] °C. In an embodiment, the mixture entering the second separation subunit 24 is advantageously brought to a pressure in the range of [7;10] bar and a temperature in the range of [-30;-20] °C.

This is particularly advantageous as it allows the configuration of the second sub-unit to operate based on a specific gas present in the fluorinated compound that contaminates the SF6, SF6 which is to be extracted in the purest form possible. For instance, the second sub-unit can be calibrated to operate under pressure and temperature conditions such that the SF6 remains liquid but SF4 (a decomposition product of SF6) is beyond its boiling point.

Any gaseous compounds exiting column 24 can be returned to the first column 14 such that they can be extracted and conveyed towards other columns or to the waste exit 5.

Regarding the gaseous waste compounds, they too can be subject to further separation operations.

Therefore, in an embodiment, it is provided that the separation unit 4 includes a third separation subunit 34 with an inlet 134 suitable to receive a gaseous mixture, a first outlet 234 suitable to provide a liquid-state mixture, and a second outlet 334 suitable to provide a gaseous-state mixture, with the inlet 134 of the third separation subunit 34 being in fluid dynamic communication with the second outlet 314 of the first separation subunit 14, and the first outlet 234 of the third separation subunit 34 being in fluid dynamic communication with a third inlet 514 of the first separation subunit 14 such that the liquid mixture exiting from the third separation subunit 34 can mix with the condensed gas mixture present in the first separation subunit 14.

The mixture entering the third separation subunit 34 is advantageously brought to a pressure in the range of [10;50] bar and a temperature in the range of [-50;0] °C. In an embodiment, the mixture entering the third separation subunit 34 is advantageously brought to a pressure in the range of [30;50] bar and a temperature in the range of [-10;-15] °C.

Figure 2 shows a configuration where a group of further separation subunits, specifically a fourth 44 and a fifth 54 separation subunit, are connected in cascade to the second subunit 24, with the inlets 144, 154 in fluid dynamic communication with the first outlet 224, 244 of the upstream subunit and the second outlet 344, 354 in fluid dynamic connection, possibly through a buffer tank, with the second or another inlet 414 of the first separation subunit 14 so that the gaseous mixture exiting from the second and further separation subunits 24, 44, 54 can mix with the gas mixture to be separated present at the first inlet 114 of the first separation subunit 14. The number of second subunits in cascade can vary depending on the degree of purity the plant needs to achieve.

The liquid mixture exiting from the second separation subunit 24 can advantageously be brought to a pressure in the range of [4;10] bar and a temperature in the range of [-50;-20] °C in the fourth separation subunit 44. Optionally, the mixture exiting from the second separation subunit 24 can be advantageously brought to a pressure in the range of [4;6] bar and a temperature in the range of [-45;-35] °C.

The liquid mixture exiting from the fourth separation subunit 44 can advantageously be brought to a pressure in the range of [4;10] bar and a temperature in the range of [-50;-20] °C in the fifth separation subunit 54. Optionally, the liquid mixture exiting from the fourth separation subunit 44 can be advantageously brought to a pressure in the range of [4;6] bar and a temperature in the range of [-45;-40] °C in the fifth separation subunit 54.

Figure 3 shows a configuration where a group of third separation subunits is present, specifically a sixth 64 and a seventh 74 separation subunit, connected in cascade, with the inlets 164, 174 in fluid dynamic communication with the second outlet 334, 364 of the upstream subunit and the first outlet 264, 274 in fluid dynamic connection with the third inlet 514 of the first separation subunit 14 so that the liquid mixture exiting from the third separation subunits 34, 64, 74 can mix with the condensed gas mixture present in the first separation subunit 14. The number of third subunits in cascade can vary depending on the degree of purity the plant needs to achieve.

The gaseous mixture exiting from the third separation subunit 34 is advantageously brought to a pressure in the range of [10;50] bar and a temperature in the range of [-50;-10] °C in the sixth 64 and subsequent 74 separation subunits. Optionally, the gaseous mixture exiting from the third separation subunit 34 is brought to a pressure in the range of [40;50] bar and a temperature in the range of [-25;-15] °C in the sixth 64 and subsequent 74 separation subunits.

Figure 4 shows a configuration where both a group of second separation subunits and a group of third separation subunits are present. The references used are the same as in the previous figures 2 and 3.

Figure 5 shows a detailed diagram of a fluid dynamic circuit 3 that can be employed in a plant according to an embodiment of the present invention.

A dry pump 7, an expansion circuit at the compressor inlet, and the compressor itself allow for the extraction of the entire mixture to be regenerated, initially in a liquid state, for example, stored in a pressurized cylinder 100. The aforementioned elements enable the transfer of the mixture, both in liquid and gaseous forms, into the filters 6. The pump allows for the recovery of all the residual mixture to be regenerated present in the cylinder by reaching vacuum, the filters can receive the mixture in both liquid and gaseous states. The expansion circuit serves to reduce the pressure at the compressor inlet 8.

The group of filters 6, in the specific example shown, is composed of a molecular sieve/activated alumina filter 306 followed by a dust filter 406. The branch shown in solid line in parallel may be a bypass circuit that excludes the filters in the upper branch or may itself contain one or more cascade filters, for example, activated carbon filters. The output of this stage can be subject to further filtering based on the discussion above with reference to Figure 6.

The compressor 8 and the heat exchanger 9 act on the compound exiting from the group of filters 6, varying its pressure and temperature while keeping it in a gaseous state. An additional group of filters, 306' and 406', operating at high pressure, is located downstream of compressor 8.

The next stage is represented by a separation unit 4 consisting of separation columns where there is a heat exchanger capable of bringing the incoming compound to a temperature such as to condense the sulfur hexafluoride, but not the remaining compounds present in the mixture as described in the previous pages with reference to figures 2, 3, and 4.

In particular, the structure shown in Figure 7 reproduces the principle scheme of Figure 4 where there is a main subunit 14 and n, specifically three 24, 44, 54, secondary subunits in cascade at the exit of the liquid-state compound from the main subunit 14 and m, specifically three 34, 64, 74, tertiary subunits in cascade at the exit of the gaseous-state compound from the main subunit 14.

Completing the plant are a buffer tank 13 for the gaseous-state compound exiting from the secondary subunits 24, 44, 54, a compressor 12 for sending gas from the buffer tank 13 to the main subunit 14, another compressor 14 followed by a heat exchanger 11 for conditioning the gaseous-state compound exiting from the main subunit 14 towards the tertiary subunits 34, 64, 74, a pump 17 to convey the exiting compound towards a storage tank 200, and a refrigeration system 15 that underlies the heat exchange with the fluid to be processed to achieve the temperatures necessary to ensure the separation of components.

The refrigeration system 15 can be of any type and can advantageously include energy recovery systems such as, for example, those generated during the expansion of the gas entering the plant.

According to a variant, one or more of the columns of the different sub-units may comprise one or more of the following additional components:

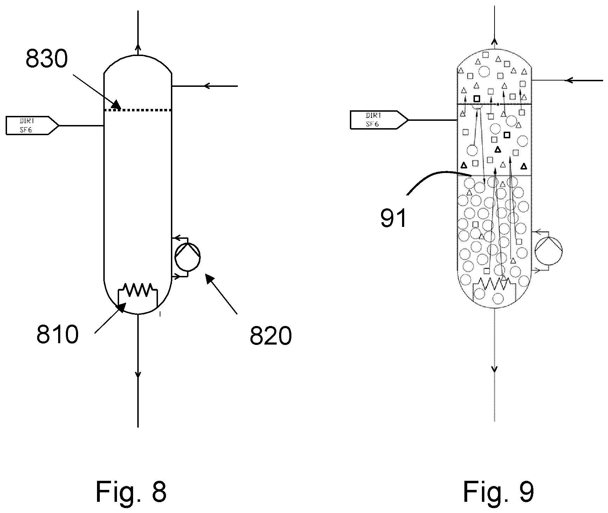

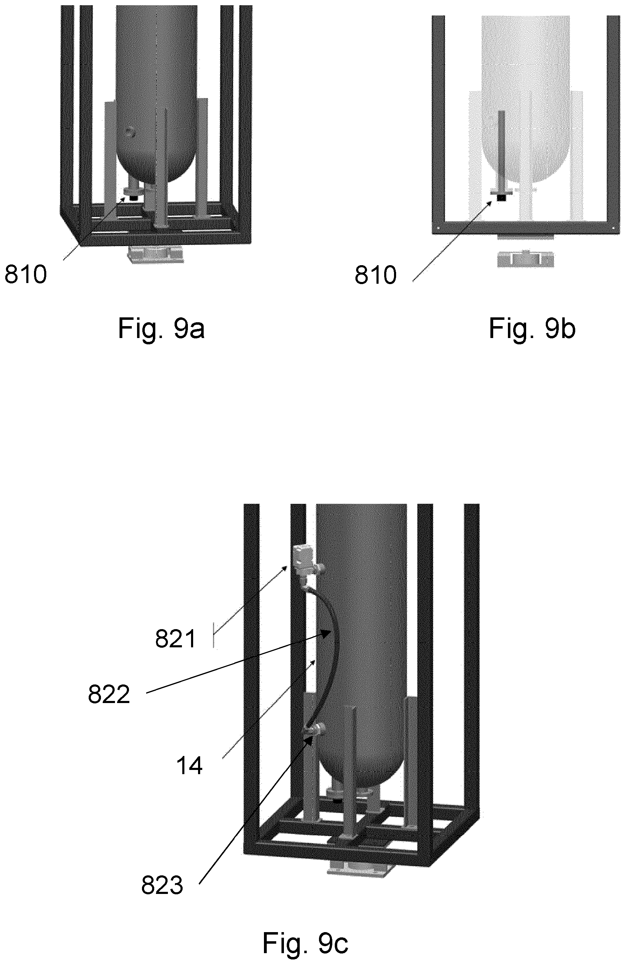

- a heating element such as an electric resistance heater 810, shown in Figures 8, 9a, and 9b, installed inside the separation column and immersed in the liquid phase of the gas to generate a boiling phenomenon of lighter gas molecules, creating a flow that pushes these molecules from the bottom of the column towards the upper part of the column where waste gases are separated and then transferred to the next column for process repetition or towards the collection outlet. The resistance heater must be sized to locally increase the temperature of the gas to facilitate the separation of pollutants dissolved in it. This technical feature is freely combinable with other possible embodiments described here or generally falling within the spirit of the invention.

- a high-speed micropump 820, Figures 8 and 9c, for circulating the liquid phase gas inside the separation column. It is known that high-frequency rotation generates cavitation within the liquid. The invention exploits this phenomenon to ensure that the bubbles generated by cavitation drag the light and difficult-to-condense gas molecules trapped in the liquid SF6 towards the gaseous part of the column. To achieve cavitation, it is necessary to know the value of NPSH:

$$NPSH = \frac{Po - Pv}{\rho g} + \Delta Z - Y$$

Where:

Po = pressure of SF6 in the column (e.g. about 8 bar in the last column)
Pv = vapor pressure of SF6 (e.g. 3.4 bar at -40°C)
$\rho$ = density of SF6
g = acceleration due to gravity = 9.81 m/s$^2$
$\Delta Z$ = geodetic height
Y = pressure losses

For example, considering a pressure of about 8 bar in the column and a vapor pressure of SF6 of about 3.5 bar at a temperature of -40°C, an NPSH value of about 48 m is obtained. To achieve cavitation, it is therefore necessary to use a centrifugal pump with an NPSH suction capacity greater than 48 m. Alternatively, greater pressure losses can be generated by adding a flow constriction at the pump's inlet.

This technical feature is freely combinable with other possible embodiments described here or generally falling within the spirit of the invention.

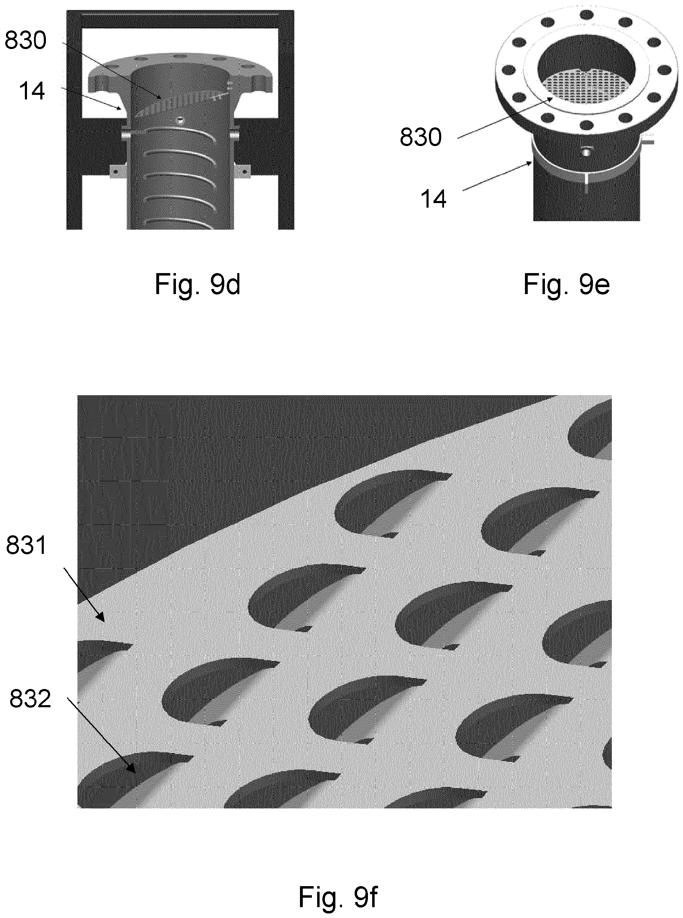

- one or more lamination filters 830, Figures 8 and 9d-9f, the application of which allows to improve the a filtration phenomenon through the recondensation of SF6 in gaseous state when it contacts the lamination unit. Conversely, the molecules of gases that are difficult to condense will pass through the lamination filter unit and continue their path towards the top of the column and into the next process stage in aerial forms. This technical feature is freely combinable with other possible embodiments described here or generally falling within the spirit of the invention.

In the embodiment described here and shown in Figure 9c, the micropump includes a motor 821, a conduit 822 that draws the fluid through a sealed fitting 823.

With reference to the lamination filter feature 830, it is kept at low temperature as it is in contact with the refrigerating circuit 15 (connection not shown in the figure) and with the fluorinated gas. The contact with the lamination filter causes the condensation of SF6 that passes through it in gaseous form, as the filter is located at the top of the column. The SF6 gas is thus condensed and falls in the bottom part whereas other gases having lower condensation temperature continues to the other sub-units for the treatment of the gaseous mix.

Preferably, the filter 830 includes a slanted stainless steel plate 831 located inside the column 14 (or another column) at the upper part of it. Preferably, the plate is inclined at an angle of 10° to 30° relative to the horizontal axis of the column so as to allow the dripping of the liquid SF6 formed.

Preferably, the plate 831 is perforated and even more preferably made with crescent-shaped holes 832 whose tabs are further inclined to facilitate the dripping of the liquid SF6.

When arranged so that the lower part of the plate contacts the inner shell surface of the column, the edge at the lower end of the plate 831 is crescent-shaped perforated to prevent the liquid SF6 from accumulating on the filter and failing to drip.

In general, holes can be of various numbers, distributions, and types including crescent-shaped and triangular holes.

In particular, the embodiment described here includes all three features together, but this should not be considered limiting of the invention, which can also be implemented with any single one or any combination of these features.

Figure 9 shows the behavior of the fluorinated compound within a separation column where the three features described here are present. The combination of resistance and micropump for cavitation effect allows the generation of bubbles within the compound in liquid form; the gas of these bubbles rises to the top of the column, surpassing the solid/liquid interface and then encountering the lamination filter 80, which cooperates in the condensation of the SF6, allowing other gases to continue.

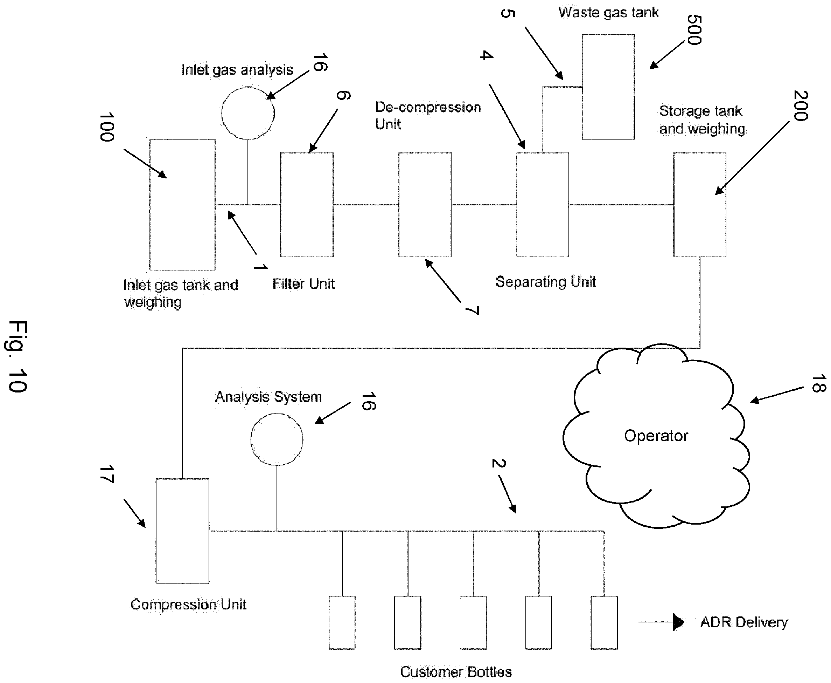

Figure 10 briefly shows the various processing phases of the fluorinated compound to be regenerated in a plant according to an embodiment of the invention.

The incoming compound, stored in a pressurized cylinder 100 in a liquid state, is weighed and analyzed, for example, by a gas chromatograph 16, to assess the extent of impurities present. The compound is then brought to a gaseous state before being sent to a bank of filters 6 comprising molecular sieves / activated alumina / activated carbon / particulate filters in any configuration and number as described above with reference to Figure 6.

The gas exiting from the filters 6 reaches a separation unit 4 described above with reference to the preceding figures. The waste gas is stored in a cylinder 500 while the regenerated fluorinated compound is sent to a storage unit 200.

The final phase of the process involves an analysis of the purity of the regenerated compound, for example, by a gas chromatograph 16, before the definitive transfer to cylinders or tanks destined for final customers after a compression phase 17.

A control unit 18 underlies the operation of the plant, for example, by activating a certain number of separation subunits and/or filters depending on the amount of contaminants present in the initial compound and the degree of purity that must be achieved.

## Claims

1. Plant for the regeneration of fluorinated compounds, in particular sulfur hexafluoride, comprising:

   an inlet section (1) adapted to receive a gas mixture comprising the fluorinated compound to be regenerated;
   an outlet section (2) suitable for conveying the regenerated compound to the outlet;
   a fluid dynamic circuit (3) connecting the inlet section (1) with the outlet section (2), comprising heat exchangers (9, 10, 11) and/or compressors (8, 12, 14) to vary the working pressures and temperatures of the fluorinated compound to be regenerated and comprising filtering elements, **characterized in that** the filtering elements comprise a separation unit (4) comprising means for regulating the pressure and temperature of the gas mixture which is brought to a temperature and pressure such as to make the fluorinated compound condense while keeping the other components of the mixture in a gaseous state, the compound condensed fluorinate representing the compound to be conveyed towards the outlet section (2), which is connected to a waste section (5),

   wherein the separation unit (4) comprises several separation sub-units connected in cascade suitable for refining the separation process of the fluorinated compound from the other gases present in the mixture.

2. Plant according to claim 1, wherein the separation unit comprises a first separation sub-unit (14) having a first inlet (114) adapted to receive the gas mixture to be separated, a first outlet (214) for supplying the condensed gas mixture and a second outlet (314) for supplying the uncondensed gas mixture.

3. Plant according to one or more of the preceding claims, wherein the separation unit (4) comprises a second separation sub-unit (24) having an inlet (124) suitable for receiving a mixture in the liquid state, a first outlet ( 224) suitable for supplying a mixture in the liquid state and a second outlet (324) suitable for supplying a mixture in the gaseous state, the inlet (124) of the second separation sub-unit (24) being placed in fluid dynamic communication with the first outlet (214) of the first separation sub-unit (14), the second outlet (324) of the second separation sub-unit (24) being placed in fluid dynamic communication with a second inlet (414) of the first separation sub-unit (14) so that the aeriform mixture leaving the second separation sub-unit (24) can mix with the gas mixture to be separated located at the first inlet (114) of the first separation sub-unit (14).

4. Plant according to one or more of the preceding claims, wherein the separation unit (4) comprises a third separation sub-unit (34) having an inlet (134) suitable for receiving a mixture in the gaseous state, a first outlet (234) suitable for supplying a mixture in the liquid state and a second outlet (334) suitable for supplying a mixture in the gaseous state, the inlet (134) of the third separation sub-unit (34) being placed in fluid dynamic communication with the second outlet (314 ) of the first separation sub-unit (14), the first outlet (234) of the third separation sub-unit (34) being placed in fluid dynamic communication with a third inlet (514) of the first separation sub-unit (14) so that the liquid mixture leaving the third separation sub-unit (34) can be mixed with the condensed gas mixture present in the first separation sub-unit (14).

5. Plant according to one or more of the preceding claims, wherein the separation unit (4) comprises a group of second separation sub-units comprising a third (44) and a fourth (54) separation sub-units connected in cascade having the respective inlet (144, 154) in fluid dynamic communication with the first outlet (224, 244) of the upstream sub-unit and the second outlet (344, 354) in fluid dynamic connection, possibly via a buffer tank (13), with the second or a further inlet (414) of the first subunit separator (14) so that the aeriform mixture leaving the second separation sub-units (24, 44, 54) can mix with the gas mixture to be separated present at the first inlet (114) of the first separation sub-unit ( 14).

6. Plant according to one or more of the preceding claims, wherein the separation unit (4) comprises a group of third separation sub-units comprising a sixth (64) and at least a subsequent, (74) connected in cascade having the inlet in fluid dynamic communication with the second outlet ( 164, 174) of the upstream sub-unit and the first outlet (264, 274) in fluid dynamic connection with the third inlet (514) of the first separation sub-unit (14) so that the liquid mixture leaving the third separation sub-units separation (24, 44, 54) can be mixed with the condensed gas mixture present in the first separation sub-unit (14).

7. Plant according to one or more of the preceding claims, wherein the filtering elements comprise one or more molecular sieve filters and/or activated alumina filters and/or one or more activated carbon filters and/or particulate filters (6).

8. Plant according to one or more of the preceding claims, wherein there is an expansion circuit (7) which allows to supply the inlet section (1) with a gas mixture in the gaseous state when the mixture to be regenerated is in the liquid state, for example stored in a pressurized cylinder (100).

9. Plant according to one or more of the preceding claims, wherein one o more of the said separation sub-unit comprise at least one of:

    - a heating element (810) in contact with the fluorinated compound in liquid form;
    - a recirculation element (820) for the recirculation of the fluorinated compound in liquid form within an expansion column of the separation sub-unit;

    a lamination filter (830), connected to a cooling circuit (15), in contact with the gaseous-state mixture and inside an expansion column of the separation sub-unit.

10. Plant according to claim 9 wherein there is a lamination filter (830), connected to a cooling circuit (15), in contact with the gaseous-state mixture and inside an expansion column of the separation sub-unit, and wherein the lamination filter (830) includes a metal plate (831) inclined located inside an expansion column of the separation sub-unit and positioned at the upper part of it, said plate preferably inclined at an angle of 10° to 30° relative to the horizontal axis of the column and said plate (831) preferably perforated and more preferably made with crescent-shaped holes (832) whose tab is further inclined downwards relative to said plate (831).

11. A method for regenerating fluorinated gases, in particular sulfur hexafluoride, from a mixture containing incoming fluorinated gases comprising:

    separating the fluorinated compound from the remaining compounds present in the mixture by bringing the gas mixture to a temperature and pressure such as to cause the fluorinated compound to condense while keeping the other components of the mixture in a gaseous state; conveying the mixture in the gaseous state towards a waste section, possibly repeating in succession the separation step on the waste mixture to reduce the presence of fluorinated compounds in the waste mixture.

12. Method according to claim 11 which comprises the further steps of:

    - providing a plant according to one or more of the previous claims from 1 to 10;
    - treating the gas mixture entering the first separation sub-unit (14) according to a first treatment by bringing it to a pressure in the range of [10;50] bar and a temperature in the range of [-50;+5] °C.

13. Method according to claim 12, wherein the condensed fluorinated compound resulting from said first treatment is subjected to a second treatment in which it is brought to a pressure in the range of [6;10] bar and a temperature in the range of [-50;-10] °C.

14. Method according to claim 13, wherein the condensed fluorinated compound resulting from said second treatment is subjected to a third treatment in which it is brought to a pressure in the range of [4;10] bar and a temperature in the range of [-50;-20] °C.

15. Method according to claim 14, wherein the condensed fluorinated compound resulting from said third treatment is subjected to a fourth treatment in which it is brought to a pressure in the range of [4;10] bar and a temperature in the range of [-50;-30] °C.

16. Method according to one or more of the preceding claims from 11 to 15 in which the gaseous mixture is subjected to further treatment by bringing it to a pressure in the range of [10;50] bar and a temperature in the range of [-50;0] °C.

17. Method according to claim 16, wherein the gaseous mixture is further brought to a pressure in the range of [10;50] bar and a temperature in the range of [-50;-10] °C.

18. Method according to one or more of the preceding claims from 11 to 17 comprising one or more of the following steps:

   - locally heating the fluorinated compound in liquid form by means of a heating element in contact with said compound within an expansion and condensation area;
   - performing recirculation of the fluorinated compound in liquid form within an expansion and condensation area by means of a pump sized to generate a cavitation effect of said compound in liquid form;
   - performing condensation of the gaseous mixture through condensation means arranged within an expansion and condensation area of said compound.

19. Method according to claim 18, wherein the steps of separating the waste mixture and/or the regenerated compound are repeated at different pressures/temperatures.

Fig. 1

Fig. 2

Fig. 3

Fig. 4

Fig. 5

Fig. 6

Fig. 7

Fig. 8

Fig. 9

810

Fig. 9a

810

Fig. 9b

821

822

14

823

Fig. 9c

Fig. 9d

Fig. 9e

Fig. 9f

Fig. 10

| | Europäisches Patentamt European Patent Office Office européen des brevets | **EUROPEAN SEARCH REPORT** | Application Number EP 24 17 3293 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2012/103675 A1 (PING GAO GROUP CO LTD [CN]; LI CHUNMING [CN] ET AL.) 9 August 2012 (2012-08-09) * abstract; figure 1 * ----- | 1-19 | INV. C01B17/45 B01D53/00 |
| X | CN 113 353 892 A (NANTONGHONGDENG MACHINERY EQUIPMENT CO LTD) 7 September 2021 (2021-09-07) * abstract; claims 1,10; figures 1-5 * ----- | 1,2,4-19 | |
| X | CN 108 355 461 A (UNIV XI AN JIAOTONG) 3 August 2018 (2018-08-03) * abstract; claim 1; figure 1 * ----- | 1-19 | |
| X | EP 2 699 858 A1 (ABB TECHNOLOGY LTD [CH]) 26 February 2014 (2014-02-26) * abstract; claim 1; figure 1 * * paragraph [0029] * ----- | 11 | |
| A | | 1-10 | |

| TECHNICAL FIELDS SEARCHED (IPC) |
|---|
| B01D C01B |

The present search report has been drawn up for all claims

| Place of search | Date of completion of the search | Examiner |
|---|---|---|
| Munich | 31 January 2025 | Biscarat, Jennifer |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

2

## ANNEX TO THE EUROPEAN SEARCH REPORT
## ON EUROPEAN PATENT APPLICATION NO.

EP 24 17 3293

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2025

| Patent document cited in search report | Publication date | Patent family member(s) | | Publication date |
|---|---|---|---|---|
| WO 2012103675 A1 | 09-08-2012 | CN | 102173392 A | 07-09-2011 |
| | | WO | 2012103675 A1 | 09-08-2012 |
| CN 113353892 A | 07-09-2021 | NONE | | |
| CN 108355461 A | 03-08-2018 | NONE | | |
| EP 2699858 A1 | 26-02-2014 | AU | 2012245083 A1 | 07-11-2013 |
| | | CN | 103649661 A | 19-03-2014 |
| | | EP | 2699858 A1 | 26-02-2014 |
| | | WO | 2012142672 A1 | 26-10-2012 |

EPO FORM P0459

For more details about this annex : see Official Journal of the European Patent Office, No. 12/82